(19) Europäisches Patentamt
European Patent Office
Office européen des brevets

(11) **EP 2 414 060 B1**

(12) **FASCICULE DE BREVET EUROPEEN**

(45) Date de publication et mention
de la délivrance du brevet:
**30.11.2016 Bulletin 2016/48**

(51) Int Cl.:
**B01J 19/32** (2006.01)   **B01D 3/20** (2006.01)
**B01D 53/18** (2006.01)

(21) Numéro de dépôt: **10714906.4**

(22) Date de dépôt: **01.04.2010**

(86) Numéro de dépôt international:
**PCT/FR2010/000276**

(87) Numéro de publication internationale:
**WO 2010/112709 (07.10.2010 Gazette 2010/40)**

(54) **COLONNE ET MÉTHODE DE CONTACT GAZ-LIQUIDE METTANT EN ŒUVRE UNE COMBINAISON DE PLATEAUX ET DE GARNISSAGES**

GAS-FLÜSSIGKEIT-KONTAKTIERVERFAHREN UND EINE KOMBINATION AUS PLATTEN UND FÜLLKÖRPERN EINSETZENDE KOLONNE

GAS-LIQUID CONTACTING METHOD AND COLUMN EMPLOYING A COMBINATION OF PLATES AND PACKINGS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **03.04.2009 FR 0901635**

(43) Date de publication de la demande:
**08.02.2012 Bulletin 2012/06**

(73) Titulaires:
• **IFP Énergies nouvelles**
  **92852 Rueil-Malmaison Cedex (FR)**
• **Total S.A.**
  **92400 Courbevoie (FR)**

(72) Inventeurs:
• **CHOMMELOUX, Bénédicte**
  **92400 Courbevoie (FR)**
• **HOANG-DINH, Viep**
  **F-64320 Bizanos (FR)**
• **RAYNAL, Ludovic**
  **F-69600 Oullins (FR)**

(56) Documents cités:
DE-B- 1 047 749    US-A- 5 244 604
US-A- 5 262 094    US-A1- 2007 023 937
US-B1- 6 345 811

**Description**

**Domaine de l'invention**

L'invention concerne :

- une colonne de mise en contact gaz-liquide comportant au moins deux plateaux associés à un garnissage;
- une méthode de mise en contact gaz-liquide utilisant une colonne comportant au moins deux plateaux associés à un garnissage selon l'invention.

L'invention s'applique au traitement de tout effluent gazeux, plus précisément au traitement du gaz naturel ou de gaz de synthèse ou au captage du $CO_2$ contenu dans des fumées de combustion par exemple. L'invention s'applique également à la distillation ou à la distillation réactive.

**Cadre de l'invention et description de l'art antérieur :**

Dans les procédés de distillation, de distillation réactive, de traitement ou de lavage de gaz, les transferts de masse et de chaleur entre une phase gaz et une phase liquide, généralement en circulation à contre courant dans des colonnes (gaz ascendant et liquide descendant), sont réalisés au moyen de technologies, appelés contacteurs, qui favorisent ces transferts. Il existe trois grands types de contacteurs, les garnissages vracs, les garnissages structurés et les plateaux de colonnes. Les développements technologiques de ces dernières années visent à améliorer efficacité et capacité.

Un gain en efficacité de contact permet soit de réduire le nombre de plateaux de la colonne ce qui entraîne une diminution de la hauteur de la colonne et donc une réduction des coûts d'investissements (à performance constante), soit un gain en performance et donc un gain sur la qualité du produit (à géométrie de colonne constante). Un gain en capacité permet de passer plus de débits, soit gaz soit liquide, soit les deux. Ce gain en capacité peut permettre un gain de débits à diamètre de colonne constant par remplacement des contacteurs existants par des nouveaux contacteurs plus capacitifs, ce qui peut éviter la construction d'une nouvelle colonne, ou peut permettre un gain sur le diamètre de la colonne dans le cas d'une nouvelle conception. Dans les deux cas, un gain d'investissement est attendu. Parfois un gain en capacité entraîne également un gain sur les coûts de fonctionnement. En effet, dans certains procédés de lavage de gaz, le bon fonctionnement du contacteur est assuré par une valeur minimale du débit de liquide par unité de surface. L'utilisation d'un contacteur plus capacitif permet alors, pour un débit gaz donné, de réduire le diamètre de la colonne. En conséquence, le débit de liquide par unité de surface étant maintenu constant, le débit total de liquide diminue. Les coûts opératoires associés à la circulation du liquide s'en trouvent ainsi diminués.

Les plateaux de colonne pour colonnes de distillation de lavage ou de traitement de gaz ont été développés depuis de nombreuses années et leur dimensionnement est bien établi pour ce qui relève de plateaux standards (cf. par exemple Engineering Data Book edited by Gas Processors Association, 1998).

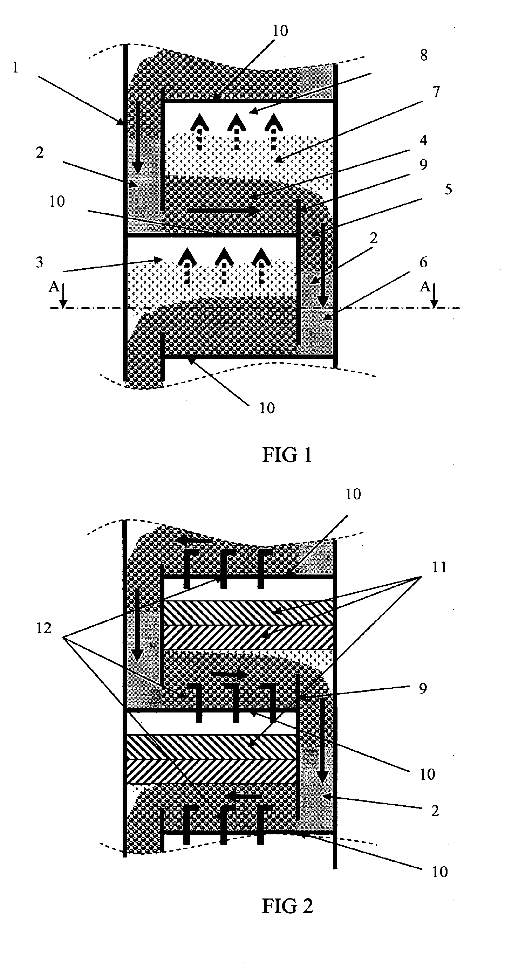

Une colonne 1 selon l'art antérieur, comme représentée en partie sur la figure 1, est équipée de nombreux plateaux 10, sur lesquels se fait le contact entre la phase gaz ascendante circulant selon les flèches en traits gras pointillés et la phase liquide descendante circulant selon les flèches en traits gras continus. Le liquide descend du plateau supérieur via un déversoir 2, traverse le plateau 10 sur lequel un niveau de liquide est retenu via un barrage 9 en extrémité de plateau. Cette zone de retenue liquide 4 est traversée par le gaz issu de la zone 3 en dessous du plateau de contact, elle est ainsi caractérisée par un bouillonnement important favorisant le transfert de masse et de chaleur entre le gaz et le liquide. Les deux phases ayant été mises en contact doivent alors être séparées. Le gaz continue son parcours ascendant au travers d'une zone de brouillard 7 dans laquelle les gouttes entraînées retombent dans la zone de transfert 4. Le gaz traverse ensuite une zone 8 dans laquelle plus aucune goutte n'est entraînée. Le gaz peut alors accéder au plateau supérieur. Le liquide quant à lui déborde au dessus du barrage 9 pour tomber dans le déversoir. Une première zone de mélange 5 existe dans laquelle les deux phases sont présentes. La section du déversoir 2 doit être telle qu'il y a séparation des phases, c'est à dire que les bulles de gaz entraînées puissent remonter vers la partie supérieure alors que le liquide continue à descendre vers le plateau inférieur en traversant une zone 6 dépourvue de gaz entraîné.

Afin d'optimiser le dimensionnement des colonnes, ces dernières années les efforts de développement se sont particulièrement portés sur l'association de plateaux de colonne avec des garnissages. Des documents récents proposent d'associer des plateaux de colonne avec des garnissages. L'objet de ces inventions est toujours d'assurer un meilleur fonctionnement du plateau, soit en améliorant le contact entre les phases gaz liquide sur le plateau par ajout de garnissages sur le plateau ce qui entraîne un gain en efficacité, soit en améliorant la séparation des phases au dessus du plateau par mise en place d'un garnissage au dessus du plateau pour faire office de séparateur ce qui entraîne un gain en capacité. Par exemple, le document US 2004/0099970 divulgue la mise en place de garnissage au dessus d'un plateau de telle sorte que l'on minimise le taux d'entraînement de gouttelettes du plateau inférieur vers le plateau supérieur. Le garnissage est alors considéré comme un élément de séparation permettant notamment une réduction de l'espace entre plateaux ce qui se traduit au total par un gain sur la hauteur de colonne. Dans le cas du document EP 0381388, un garnissage est mis en place sur le plateau de telle sorte qu'il favorise le transfert de masse ce qui est favorable à une meilleure efficacité du procédé. Dans ces deux derniers cas, l'hydrodynamique des courants gaz et liquide n'est pas significativement différente de celle de plateaux standards.

Le document DE1047749 décrit une colonne équipée de deux plateaux entre lesquels se trouve une couche déflectrice. Le liquide est transféré d'un plateau à l'autre au moyen d'un déversoir sans être distribué sur la couche réflectrice.

## Description de l'invention

La présente invention propose une association originale d'un plateau avec un garnissage de telle sorte qu'une partie du liquide est déviée du plateau pour arroser directement le garnissage situé sous le plateau. Il y a alors allégement de la charge de débit liquide dans les déversoirs, utilisation d'un volume de garnissage au lieu d'un volume vide pour augmenter l'efficacité de transfert dans le volume de la colonne, redistribution de la phase gaz dans le volume du garnissage et séparation gouttelettes liquide/gaz dans le volume du garnissage. Tous ces effets contribuent à une meilleure efficacité et surtout à une augmentation des capacités de débits de gaz et de liquide.

## Résumé de l'invention

De manière générale, la présente invention décrit une colonne de contact gaz-liquide comportant au moins un plateau supérieur et un plateau inférieur, un déversoir pour conduire le liquide du plateau supérieur au plateau inférieur, les plateaux comportant des orifices de passage du gaz. Selon l'invention, un garnissage est disposé entre le plateau supérieur et le plateau inférieur et le plateau supérieur comporte des moyens pour soutirer du liquide du plateau supérieur, le liquide soutiré étant distribué sur le garnissage.

Selon l'invention, lesdits moyens peuvent être déterminés pour soutirer entre 5% et 80% du liquide circulant sur le plateau supérieur. Lesdits moyens peuvent comporter des tubes. Les tubes peuvent avoir une hauteur comprise entre 2 cm et 10 cm, préférentiellement entre 4 cm et 6 cm, et un diamètre compris entre 0,5 cm et 3 cm. Lesdits tubes peuvent comporter une ouverture supérieure orientée face à l'écoulement du liquide sur le plateau supérieur.

Lesdits moyens peuvent choisis de manière à interdire le passage de gaz au travers desdits moyens.

Le garnissage peut être choisi parmi les garnissages vrac et les garnissages structurés.

La présente invention propose également une méthode de mise en contact gaz-liquide dans laquelle :

- on introduit un gaz en fond d'une colonne comportant au moins un plateau supérieur et un plateau inférieur,
- on introduit du liquide en tête de la colonne,
- on conduit une première partie du liquide du plateau supérieur sur le plateau inférieur à travers un déversoir,

caractérisée en ce que

- on dispose un garnissage entre le plateau supérieur et le plateau inférieur,
- on collecte une deuxième partie du liquide du plateau supérieur par des moyens de soutirage, et
- on distribue, par lesdits moyens de soutirage, ladite deuxième partie du liquide sur le garnissage de manière à mettre en contact le gaz circulant dans le garnissage avec ladite deuxième partie du liquide.

Selon l'invention, la deuxième partie du liquide peut être composée entre 5% et 80% du liquide circulant sur le plateau supérieur.

La méthode selon l'invention peut être mise en oeuvre pour l'une des applications suivantes: distillation, distillation réactive, captage du $CO_2$ contenu dans des fumées de combustion, absorption d'au moins un des composés $CO_2$ et $H_2S$ contenu dans un gaz naturel ou un gaz de synthèse.

## Brève description des figures

- la figure 1 schématise une portion de colonne à plateau selon l'art antérieur,
- la figure 2 schématise une portion de colonne à plateaux associés à des garnissages selon l'invention,
- la figure 3 schématise un plateau selon l'art antérieur vu du dessus,

- la figure 4 schématise un plateau selon l'invention vu du dessus,
- les figures 5a et 5b représentent des éléments de redistribution de liquide selon l'invention,
- la figure 6 représente l'écoulement du gaz dans une colonne à plateaux selon l'art antérieur,
- la figure 7 représente l'écoulement du gaz dans une colonne à plateaux et garnissages selon l'invention,
- la figure 8 représente des profils de vitesse au centre de colonnes selon l'art antérieur et selon l'invention dans l'espace inter-plateaux.

## Description détaillée de l'invention

La présente invention, schématisée par la figure 2 consiste d'une part à modifier les plateaux 10 pour leur adjoindre des systèmes de redistribution de liquide spécifiques 12 et d'autre part à mettre en place du garnissage 11 posé directement sur les plateaux ou positionné au dessus de ceux-ci. L'objet des systèmes de redistribution 12 de liquide est de soutirer une partie du débit de liquide sur le plateau pour arroser le garnissage 11 situé sous ce plateau. En d'autres termes, le liquide circulant sur le plateau selon l'invention est partagé en deux fractions. Une fraction du liquide est collectée et directement envoyé sur la partie supérieure du garnissage situé sous le plateau par les éléments 12. Le liquide collecté par les éléments 12 traverse le garnissage 11 avant d'atteindre le plateau inférieur. Dans le garnissage 11 la fraction liquide soutirée par les éléments 12 est mise en contact avec la phase gaz ascendante. La partie restante de liquide sur le plateau franchit le barrage 9 pour descendre par le déversoir 2 directement sur le plateau inférieur sans traverser le garnissage.

Le nombre et la taille des éléments de redistribution liquide 12 doivent être ajustés afin de conduire vers le garnissage entre 5 et 80% du liquide, préférentiellement entre 10 et 50% du liquide. La fraction restante de liquide passe par le déversoir 2 pour atteindre le plateau inférieur.

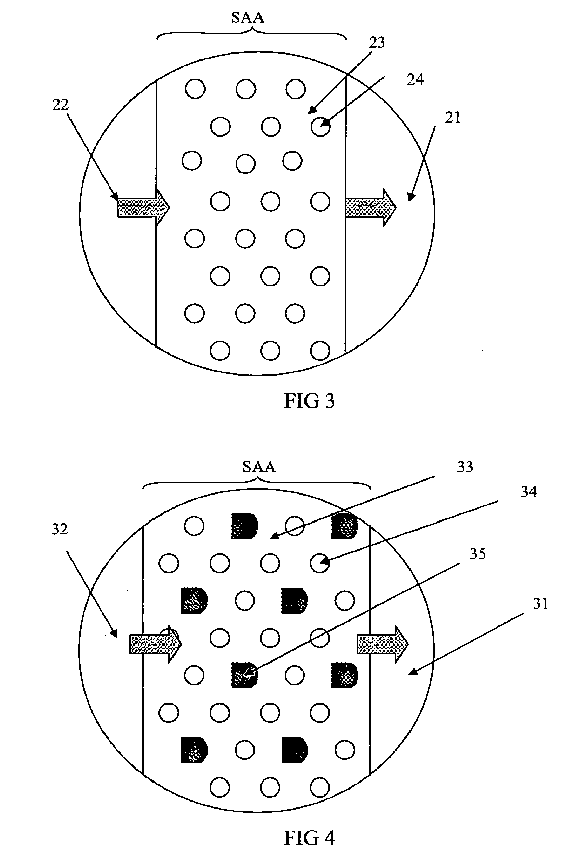

Les figures 3 et 4 représentent des vues de dessus selon la coupe AA, référencée sur la figure 1, des plateaux (23 ou 33 de section d'aire active SAA) respectivement dans le cas de l'état de l'art (figure 3) et de la présente invention (figure 4). Les sections 22 et 32 correspondent aux déversoirs provenant du plateau supérieur. Les sections 21 et 31 correspondent aux déversoirs alimentant le plateau inférieur. L'écoulement de liquide sur les plateaux est indiqué par les flèches, de la gauche vers la droite sur les figures 3 et 4. Le gaz circule de façon ascensionnelle au travers des orifices 24 ou 34. Sur la figure 4, le plateau selon l'invention comporte des systèmes de prélèvement de liquide 35. Par exemple par rapport au plateau de la figure 3, sur la figure 4, un orifice de passage gaz sur quatre a été remplacé par un système de prélèvement de liquide 35.

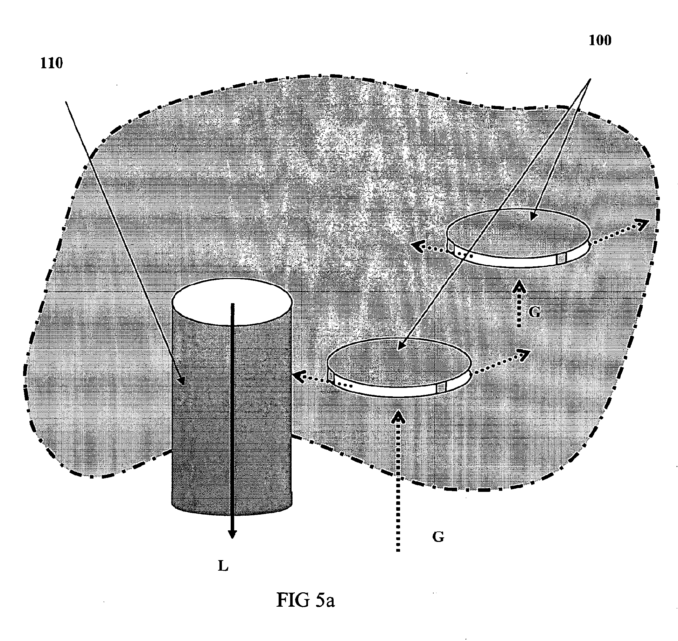

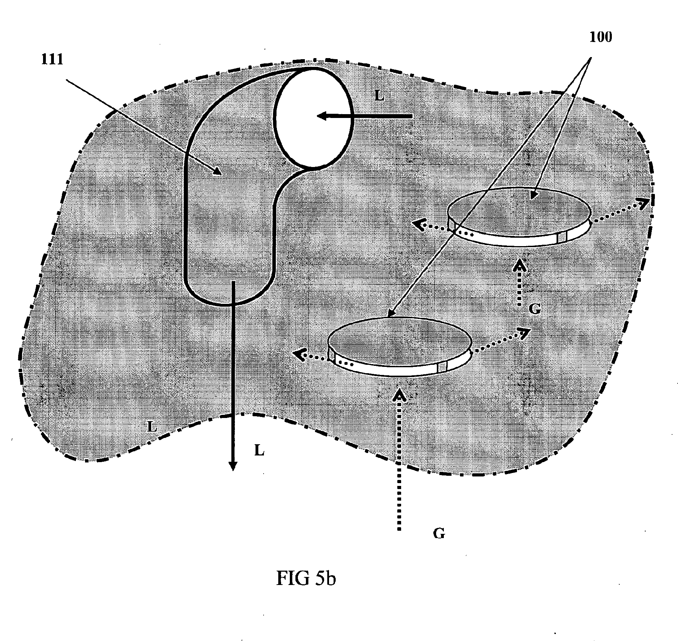

Différentes géométries des éléments de redistribution du liquide sont représentées sur les figures 5a et 5b. Les orifices de passage du gaz sont représentés sous la forme de clapets 100. On peut également utiliser une technologie de type plateaux perforés qui sont bien adaptés pour la mise en place de garnissage. Les flèches en trait pointillés schématisent le chemin de passage du gaz G. Le système de redistribution du liquide peut prendre plusieurs formes. En référence à la figure 5a, le système de redistribution du liquide comporte un conduit 110 traversant le plateau. La position de l'ouverture supérieure et la section interne du conduit sont notamment choisies pour autoriser uniquement la descente de liquide L du plateau vers le garnissage situé sous le plateau selon la flèche en trait plein. En référence à la figure 5b, le système de redistribution est constitué d'un conduit 111 dont l'extrémité supérieure est coudée de manière à ce que la face ouverte au liquide soit face à l'écoulement liquide. En d'autres termes, la face ouverte au liquide est verticale et regarde en direction de la section 32 référencée sur la figure 4 du déversoir provenant du plateau supérieur.

Il est important que le système de redistribution du liquide selon l'invention soit bien un conduit permettant le passage de liquide du plateau vers l'espace inférieur et non pas une conduite laissant passer du gaz de l'espace inférieur vers le plateau.

La forme de la section de la conduite peut être quelconque (circulaire, rectangulaire...). Le nombre, le diamètre et la hauteur des éléments de redistribution du liquide doivent être adaptés au débit liquide vers le garnissage de manière à interdire le passage de gaz.

Plus précisément, l'aire active des éléments de redistribution du liquide, c'est-à-dire la somme de l'aire des section des tubes d'un plateau, représente entre 1 et 20% de l'aire active totale du plateau, préférentiellement entre 1 et 5%. Les tubes formant les éléments de redistribution du liquide ont une hauteur comprise entre 2 cm et 10 cm et préférentiellement entre 4 cm et 6 cm. Leur diamètre est compris entre 0,5 cm et 3 cm. Le nombre de tubes sur un plateau est fonction de la taille de la colonne. A titre indicatif, un minimum de 5 tubes par plateau est nécessaire pour le fonctionnement de l'invention. Cependant, le nombre de tubes par plateau peut monter jusqu'à plusieurs dizaines, voire jusqu'à 100 tubes par plateau.

La présente invention consiste donc à adapter tout type de plateaux existants (clapets, cloche, perforés...) pour une utilisation combinée avec le garnissage en vrac ou structuré. Notre préférence est d'utiliser le type avec clapet conjugué à un garnissage structuré. Les éléments de redistribution du liquide doivent être ajoutés aux plateaux existants. Leurs caractéristiques géométriques ainsi que leur nombre sont adaptés selon l'utilisation envisagée de la colonne. Les éléments de collecte et de redistribution permettent au liquide d'être distribué de manière homogène sur tout type de garnissage existant, de préférence des garnissages structurés à fort taux de vide. Il peut être intéressant de diminuer la hauteur des galettes de garnissages (valeurs industrielles proches de 200 mm) pour les ramener à une hauteur de préférence égale à 100 mm. Cela permet une mise en place préférée de deux galettes alternées de 90° l'une par rapport à l'autre dans leur direction principale.

L'intérêt de la combinaison selon l'invention du plateau avec un garnissage et des moyens de distribution de liquide du plateau sur le garnissage est multiple.

Premièrement, elle permet de valoriser une portion importante du volume de la colonne qui sans l'ajout de garnissage est presque totalement inutilisée d'un point de vue transfert. Le volume constitué des zones 7 et 8 de la figure 1 est aussi important voire plus important que celui pleinement utilisé pour le contact 4. Dans le cadre de la présente invention, ces zones 7 et 8 peu contributives du contact gaz/liquide sont remplies par le garnissage 11 sur la figure 2. Le garnissage 11 est alimenté en liquide grâce aux systèmes de collecte et de distribution de liquide 12. Selon l'invention, le garnissage peut alors remplir son rôle de contacteur, le liquide ruisselant le long du garnissage et le gaz circulant à contre-courant au coeur du garnissage. Le garnissage peut être de type vrac ou structuré (par exemple de type selles Intalox, IMTP50, Montz 200 ou Mellapak 250). Le garnissage peut être choisi de façon à ce qu'il permette de passer les débits de gaz et de liquide requis. Ce gain en volume utile induit un gain en efficacité important ce qui peut donc entraîner un gain sur la hauteur de la colonne.

Deuxièmement, l'utilisation de garnissage au dessus du plateau permet de redistribuer la phase gaz. En effet, en référence à la figure 3, la section de passage utile à la phase gaz correspond, dans le cas de l'art antérieur, à la section d'aire active, SAA. La section 22 correspondant au déversoir du plateau supérieur ne permet pas de passage de gaz. La section 21 d'aire SD correspondant à l'espace situé au-dessus du déversoir vers le plateau inférieur reste libre au passage du gaz, mais en réalité n'est pas exploitée.

L'ajout de garnissage selon l'invention permet de redistribuer le gaz sur la section aire active SAA + aire au dessus du déversoir (aire SD). Cette redistribution va dans le sens d'une vitesse locale de gaz moindre. Certaines gouttes formées à l'interface gaz/liquide au dessus de l'aire active sont entraînées par le gaz, elles sont, dans le cas de l'art antérieur, séparées de la phase gaz dans la zone de désengagement, référencée 7 sur la figure 1, dans un écoulement de gaz caractérisé par une vitesse gaz $Ug_{\_art\ anterieur}$ donnée par la relation:

$$Ug_{\_art\ anterieur} = Qg/SAA \qquad\qquad (1)$$

où Qg correspond au débit volumique de gaz. Afin de ne pas entraîner de gouttes vers le plateau supérieur (phénomène dit d'engorgement ou de "flooding") qui entraîne une détérioration des performances de la colonne, il faut que cette vitesse soit inférieure à une vitesse critique de gaz, $U_{G\_critique}$, au delà de laquelle les gouttelettes sont entraînées, c'est à dire :

$$Ug < U_{G\_critique} \qquad\qquad (2)$$

Le fait de redistribuer le gaz sur la section {SAA+SD} permet de modifier l'expression de calcul de Ug qui devient:

$$Ug = Ug_{\_presente\ invention} = Qg/(SAA+SD) \qquad\qquad (3)$$

Cette redistribution permet donc de passer plus de débit gaz tout en respectant le critère de l'équation (2). La présente invention permet donc un gain sur la capacité en terme de débit gaz dans le cas d'un remodelage d'une colonne existante (souhait de passer plus de débit dans une colonne existante) ou un gain sur le diamètre de la colonne (cas de conception d'une nouvelle colonne).

Troisièmement, le fait de disposer de systèmes de prélèvement liquide sur les plateaux, qui permettent d'aller arroser le garnissage situé sous ces plateaux, entraîne une diminution du débit de liquide débordant dans le déversoir. Or la section de ces déversoirs est choisie de telle sorte que la vitesse de liquide soit en deçà d'une certaine vitesse critique de liquide, $U_{L\_critique}$, pour que les bulles correspondant à la fraction de gaz entraîné dans la zone 5 de la figure 1 puissent se désengager et remonter. Deux possibilités s'offrent à l'utilisation de cet avantage. Soit on peu augmenter le débit de liquide. Soit, à débit total de liquide constant dans la colonne, on peut diminuer la section de passage SD des cheminées 32 et 31 (Figure 4) ce qui entraîne une diminution du diamètre de la colonne dans le cas d'une unité neuve, ou donne la possibilité d'augmenter la capacité de traitement dans une installation existante la section de passage gaz pouvant alors être augmentée. La présente invention permet donc un gain sur la capacité en terme de débit de gaz et de liquide dans le cas d'un remodelage d'une colonne existante (souhait de passer plus de débit dans une colonne existante) ou un gain sur le diamètre de la colonne (cas de conception d'une nouvelle colonne).

Enfin, la mise en place d'un garnissage au dessus du plateau permet de limiter l'entraînement des gouttelettes, créées à l'interface gaz/liquide sur le plateau, vers le plateau supérieur. En effet, celles-ci vont impacter la surface du garnissage pour coalescer avec le film liquide qui s'écoule à contre-courant sur ce même garnissage. Cet effet permet de pouvoir accroître la vitesse de gaz sans dégradation des performances (moins de gouttes entraînées). Une fois encore il y a un gain soit sur le débit de gaz, si l'on souhaite l'augmenter sur une installation existante en remplacement d'un équipement standard, soit sur la taille de la colonne (gain sur le diamètre) dans le cas du dimensionnement d'une nouvelle colonne.

**Exemple 1**

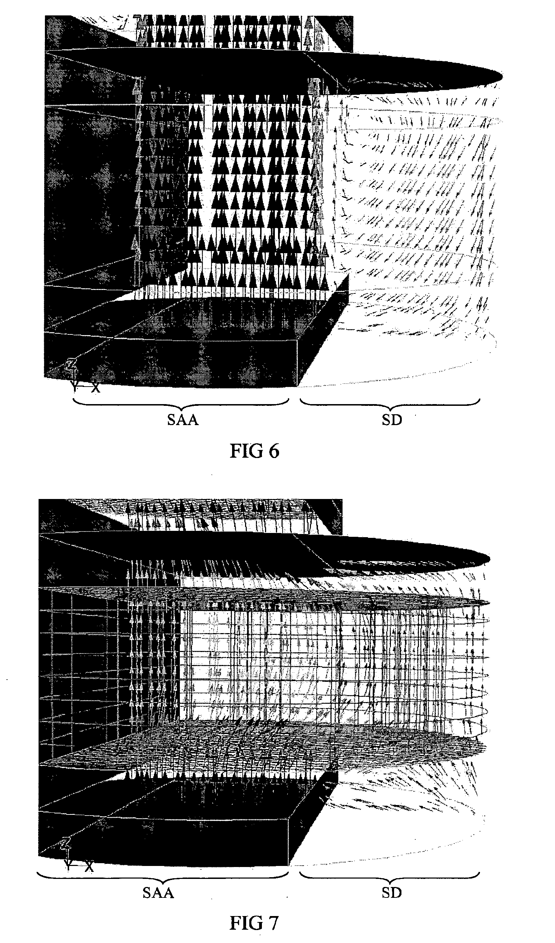

Des calculs numériques, effectués au moyen du logiciel commercial de Simulation Numérique des Écoulements Fluent 6.2, permettent de tester la redistribution sur une colonne de 0.94 m de diamètre, à un Fs de 1,1. La caractéristique Fs correspond au produit de la vitesse de gaz en fût vide par la racine de la densité du gaz aux conditions opératoires du procédé. Les figures 6 et 7 représentent les vecteurs vitesse du gaz en circulation dans l'espace inter-plateaux.

Sur la figure 6, sans garnissage, on observe une forte recirculation au dessus de l'aire SD du déversoir descendant, limitant la section utile au passage du gaz à la section correspondant à l'aire active SAA. Sur la figure 7, dans le cas avec garnissage, il y a redistribution de la phase gaz sur la section comprenant l'aire active SAA et l'aire SD au dessus du déversoir, il n'y a plus de recirculation.

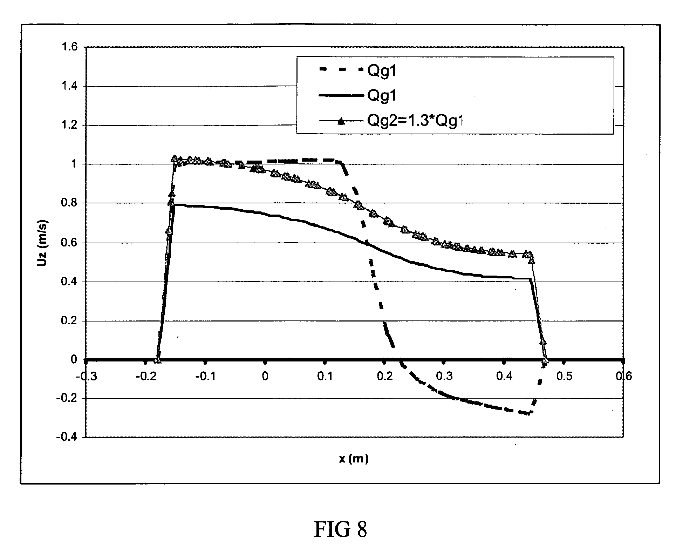

La figure 8 montre trois profils Qg1, Qg1' et Qg2 de vitesse dé gaz au centre de la colonne dans l'espace inter-plateau. Qg1 correspond à une colonne à plateau sans garnissage. Qg1' correspond à une colonne selon l'invention, c'est à dire avec plateaux, garnissages et moyens de redistributions de liquide du plateau sur le garnissage. Qg2 correspond à un deuxième profil dans une colonne selon l'invention avec une vitesse du gaz plus importante. Comme le montre la Figure 8, on passe d'une vitesse maximale sur le profil Qg1 de 1 m/s sans garnissage à une vitesse de moins de 0,8 m/s sur le profil Qg1', ce pour un débit de gaz identique. Si l'on considère que la vitesse maximale tolérable pour éviter l'entraînement de gouttelettes est de 1 m/s, la présente invention permet un gain de 30% sur le débit gaz, puisque avec un débit 1,3 fois le débit initial (voir profil Qg2) on retrouve la même valeur de vitesse maximale que dans le cas de l'état de l'art (profil Qg1).

**Exemple 2**

Le fonctionnement de l'invention est également illustré par des mesures expérimentales. Ces essais comparent l'absorption de l'oxygène de l'air par de l'eau désoxygénée. Deux types de contacteur ont été testés :

- une colonne avec des plateaux perforés standards (colonne A)
- une colonne avec la géométrie présentée dans l'invention (colonne B) : identique à la colonne A avec l'ajout de plateaux tels que décrits dans l'invention et une galette de garnissage Mellapak 250 installée entre deux plateaux successifs.

Le diamètre des deux colonnes est identique égal à 300 mm la hauteur utile totale est également identique et égale à 0,40 m.

Les plateaux tels que décrits dans l'invention possèdent les caractéristiques géométriques suivantes :

- 18 tubes droits tels que décrits dans la Figure 5a, de hauteur 0,06 m et de diamètre 0,01 m
- l'aire des éléments de redistribution représente 3% de l'aire active du plateau.

Sur la gamme de fonctionnement testée (débit gaz entre 200 et 600 $m^3$/h, débit liquide entre 0,5 et 4 $m^3$/h, pression atmosphérique et température ambiante), le taux d'absorption dans la colonne B est supérieur à celui obtenu dans la colonne A de 2 à 30%.

De plus, l'engorgement de la colonne B est plus tardif que celui de la colonne A puisque pour un même taux d'arrosage (ratio du débit liquide et de la surface de la colonne), plus de gaz peut être envoyé sur la colonne B avant de mesurer l'engorgement.

Le tableau ci après donne le gain sur la capacité gaz avant engorgement de la colonne B par rapport à la colonne A pour un taux d'arrosage.

| Taux arrosage (m3/m2/h) | Gain sur la capacité gaz |
|---|---|
| 33 | 11% |
| 47 | 27% |

**Revendications**

1. Colonne de contact gaz-liquide comportant au moins un plateau supérieur (10) et un plateau inférieur (10), un déversoir (2) pour conduire le liquide du plateau supérieur au plateau inférieur (10), les plateaux comportant des orifices de passage du gaz (34), **caractérisée en ce qu'**un garnissage (11) est disposé entre le plateau supérieur et le plateau inférieur et **en ce que** le plateau supérieur comporte des moyens (12) pour soutirer du liquide du plateau supérieur, le liquide soutiré étant distribué sur le garnissage.

2. Colonne selon la revendication 1, **caractérisée en ce que** lesdits moyens (12) sont déterminés pour soutirer entre 5% et 80% du liquide circulant sur le plateau supérieur.

3. Colonne selon l'une des revendications 1 et 2, **caractérisée en ce que** lesdits moyens (12) comportent des tubes.

4. Colonne selon la revendication 3, dans laquelle lesdits tubes (12) ont une hauteur comprise entre 2 cm et 10 cm, préférentiellement entre 4 cm et 6 cm, et un diamètre compris entre 0,5 cm et 3 cm.

5. Colonne selon les revendications 3 et 4, dans laquelle lesdits tubes (12) comportent une ouverture supérieure orientée face à l'écoulement du liquide sur le plateau supérieur.

6. Colonne selon l'une des revendications précédentes, dans lequel lesdits moyens (12) sont choisis de manière à interdire le passage de gaz au travers desdits moyens.

7. Colonne selon l'une des revendications précédentes, **caractérisée en ce que** le garnissage (11) est choisi parmi les garnissages vrac et les garnissages structurés.

8. Méthode de mise en contact gaz-liquide dans laquelle :

   - on introduit un gaz en fond d'une colonne comportant au moins un plateau supérieur (10) et un plateau inférieur (10),
   - on introduit du liquide en tête de la colonne,
   - on conduit une première partie du liquide du plateau supérieur sur le plateau inférieur à travers un déversoir (2),

   **caractérisée en ce que**

   - on dispose un garnissage (11) entre le plateau supérieur et le plateau inférieur,
   - on collecte une deuxième partie du liquide du plateau supérieur par des moyens de soutirage (12), et
   - on distribue, par lesdits moyens de soutirage (12), ladite deuxième partie du liquide sur le garnissage de manière à mettre en contact le gaz circulant dans le garnissage avec ladite deuxième partie du liquide.

9. Méthode selon la revendication 8, dans laquelle la deuxième partie du liquide est composée entre 5% et 80% du liquide circulant sur le plateau supérieur.

10. Méthode selon l'une des revendications 8 et 9, dans laquelle la méthode est mise en oeuvre pour l'une des applications suivantes: distillation, distillation réactive, captage du $CO_2$ contenu dans des fumées de combustion, absorption d'au moins un des composés $CO_2$ et $H_2S$ contenu dans un gaz naturel ou un gaz de synthèse.

**Patentansprüche**

1. Gas-Flüssigkeit-Kontaktkolonne, umfassend mindestens eine obere Platte (10) und eine untere Platte (10), einen Überlauf (2), um die Flüssigkeit von der oberen Platte zur unteren Platte (10) zu leiten, wobei die Platten Gasdurchgangsöffnungen (34) umfassen, **dadurch gekennzeichnet, dass** ein Füllkörper (11) zwischen der oberen Platte und der unteren Platte angeordnet ist und dadurch, dass die obere Platte Einrichtungen (12) umfasst, um Flüssigkeit von der oberen Platte abzuziehen, wobei die abgezogene Flüssigkeit auf dem Füllkörper verteilt wird.

**2.** Kolonne nach Anspruch 1, **dadurch gekennzeichnet, dass** die Einrichtungen (12) dafür bestimmt sind, zwischen 5 % und 80 % der auf der oberen Platte umlaufenden Flüssigkeit abzuziehen.

**3.** Kolonne nach einem der Ansprüche 1 und 2, **dadurch gekennzeichnet, dass** die Einrichtungen (12) Rohre umfassen.

**4.** Kolonne nach Anspruch 3, wobei die Rohre (12) eine Höhe im Bereich zwischen 2 cm und 10 cm, bevorzugt zwischen 4 cm und 6 cm und einen Durchmesser im Bereich zwischen 0,5 cm und 3 cm aufweisen.

**5.** Kolonne nach den Ansprüchen 3 und 4, wobei die Rohre (12) eine obere Öffnung umfassen, die gegenüber dem Abfluss der Flüssigkeit auf die obere Platte ausgerichtet ist.

**6.** Kolonne nach einem der vorhergehenden Ansprüche, wobei die Einrichtungen (12) ausgewählt sind, um das Durchströmen von Gas durch die Einrichtungen zu verhindern.

**7.** Kolonne nach einem der vorhergehenden Ansprüche, **dadurch gekennzeichnet, dass** der Füllkörper (11) aus Füllkörper-Schüttungen und geordneten Füllkörpern ausgewählt ist.

**8.** Verfahren zum Gas-Flüssigkeit-Kontaktieren, wobei:

    - ein Gas am Boden einer Kolonne, umfassend mindestens eine obere Platte (10) und eine untere Platte (10), eingeführt wird,
    - eine Flüssigkeit am Kopf der Kolonne eingeführt wird,
    - ein erster Teil der Flüssigkeit von der oberen Platte durch einen Überlauf (2) auf die untere Platte geleitet wird,

**dadurch gekennzeichnet, dass**

    - ein Füllkörper (11) zwischen der oberen Platte und der unteren Platte angeordnet wird,
    - ein zweiter Teil der Flüssigkeit der oberen Platte durch Einrichtungen zum Abziehen (12) gesammelt wird, und
    - durch die Einrichtungen zum Abziehen (12) der zweite Teil der Flüssigkeit auf dem Füllkörper verteilt wird, um das Gas, das in dem Füllkörper umläuft, mit dem zweiten Teil der Flüssigkeit in Kontakt zu bringen.

**9.** Verfahren nach Anspruch 8, wobei der zweite Teil der Flüssigkeit aus 5 % bis 80 % der Flüssigkeit besteht, die auf der oberen Platte umläuft.

**10.** Verfahren nach einem der Ansprüche 8 und 9, wobei das Verfahren für eine der folgenden Anwendungen durchgeführt wird: Destillation, reaktive Destillation, Abscheiden von $CO_2$, das in Rauchgasen enthalten ist, Absorption mindestens einer der Verbindungen $CO_2$ und $H_2S$, die in einem Erdgas oder einem Synthesegas enthalten sind.

**Claims**

**1.** A gas-liquid contact column comprising at least an upper tray (10) and a lower tray (10), a downcomer (2) for sending the liquid from the upper tray to lower tray (10), the trays comprising gas ports (34), **characterized in that** a packing (11) is arranged between the upper tray and the lower tray, and the upper tray comprises means (12) for withdrawing liquid from the upper tray, the liquid withdrawn being distributed over the packing.

**2.** A column as claimed in claim 1, **characterized in that** said means (12) are determined for withdrawing between 5 % and 80 % of the liquid circulating on the upper tray.

**3.** A column as claimed in any one of claims 1 and 2, **characterized in that** said means (12) comprise tubes.

**4.** A column as claimed in claim 3, wherein the height of said tubes (12) ranges between 2 cm and 10 cm, preferably between 4 cm and 6 cm, and the diameter thereof ranges between 0.5 cm and 3 cm.

5.  A column as claimed in claims 3 and 4, wherein said tubes (12) comprise an upper opening oriented opposite the flow of liquid on the upper tray.

6.  A column as claimed in any one of the previous claims, wherein said means (12) are so selected as to prevent passage of the gas through said means.

7.  A column as claimed in any one of the previous claims, **characterized in that** packing (11) is selected from among random packings and structured packings.

8.  A gas-liquid contact method comprising:

    - feeding a gas into the bottom of a column comprising at least an upper tray (10) and a lower tray (10),
    - feeding a liquid into the top of the column,
    - sending a first part of the liquid from the upper tray to the lower tray through a downcomer (2),

    **characterized in that** it comprises:

    - arranging a packing (11) between the upper tray and the lower tray,
    - collecting a second part of the liquid from the upper tray using withdrawal means (12), and
    - distributing, through said withdrawal means (12), said second part of the liquid over the packing so as to contact the gas circulating in the packing with said second part of the liquid.

9.  A method as claimed in claim 8, wherein the second part of the liquid consists of between 5 % and 80 % of the liquid circulating on the upper tray.

10. A method as claimed in any one of claims 8 and 9, wherein the method is used for one of the following applications: distillation, reactive distillation, capture of the $CO_2$ contained in combustion fumes, absorption of at least one of the $CO_2$ and $H_2S$ compounds contained in a natural gas or a syngas.

FIG 1

FIG 2

SAA

23

24

22

21

**FIG 3**

SAA

33

34

32

35

31

**FIG 4**

FIG 5a

FIG 5b

FIG 6

FIG 7

FIG 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040099970 A
- EP 0381388 A

- DE 1047749

**Littérature non-brevet citée dans la description**

- Engineering Data Book. 1998